# EUROPEAN PATENT SPECIFICATION

(11) **EP 2 443 359 B1**
(45) Date of publication and mention of the grant of the patent: **24.12.2014**
(21) Application number: 10725674.5
(22) Date of filing: 15.06.2010
(51) Int. Cl.: F16D 65/092

(54) **BRAKE PLATE**
BREMSPLATTE
PLAQUE DE FREIN

(30) Priority: 15.06.2009 IT TO20090457
(43) Date of publication of application: 25.04.2012
(73) Proprietor: ITT Manufacturing Enterprises LLC, Wilmington, DE 19801 (US)
(72) Inventor: SANTAMARIA RAZO, Diego, A., I-12032 Barge (IT); MARTINOTTO, Luca, I-12032 Barge (IT); DONZELLI, Daniele, I-12032 Barge (IT)
(74) Representative: Mola, Edoardo
(86) International application number: PCT/EP2010/058380
(87) International publication number: WO 2010/146047

(56) References cited:
- WO-A-00/14425
- WO-A-03/019036
- WO-A-03/091595
- DE-A1- 19 716 569
- US-A- 3 378 115

## Description

### TECHNICAL FIELD

The present invention relates to a brake pad for a breaking system, preferably for a motor vehicle.

### BACKGROUND ART

A brake pad cooperates with a brake disc to dissipate kinetic energy by friction and decrease the angular speed of the disc. In particular the disc can be rigidly connected to the wheel of a car or a motorcycle so that during braking the vehicle decelerates. In principle a brake pad consists at least of a rigid back plate or carrier and a layer of friction material.

Friction between the brake pad and the brake disc generates heat and noise. In particular, the latter effect is undesirable.

It is known from WO-A-0014425 to use a particle damping device in a braking system to avoid undesired noise. The above application relates to braking pads made of a thermo-structural material, i.e. carbon-carbon composite. In particular, the friction layer is made of a carbon-carbon composite so that this layer has also an independent structural function and can be manufactured in parallel to the back plate and then assembled. In particular, the above mentioned document discloses that the cavity housing for the particles is defined by the friction layer. However, some brake pads comprise a friction layer that is deposited on the back plate and then sintered.

A brake pad provided with a non-structural friction layer provides some open issues relating to the cost efficiency of the manufacturing method because of the fact that the friction layer is substantially inconsistent, i.e. is a mix of organic & inorganic powders and a binder, before the heat and pressure treatment.

WO-A1-03091595 discloses a brake pad according to the preamble of claim 1.

### DISCLOSURE OF INVENTION

The scope of the present invention is to provide a brake pad provided with a particle damping device for a sintered friction layer.

The scope of the present invention is achieved by a brake pad according to claim 1.

### BRIEF DESCRIPTION OF THE DRAWINGS

The present invention will now be described in a nonlimiting preferred embodiment with reference to the accompanying drawings, in which:
- figure 1 is a transversal section of a perspective view of a brake plate according to the present invention; and
- figure 2 is a graph comparing the frequency response function of a traditional brake plate (dashed) and a brake plate according to the present invention (solid).

### BEST MODE FOR CARRYING OUT THE INVENTION

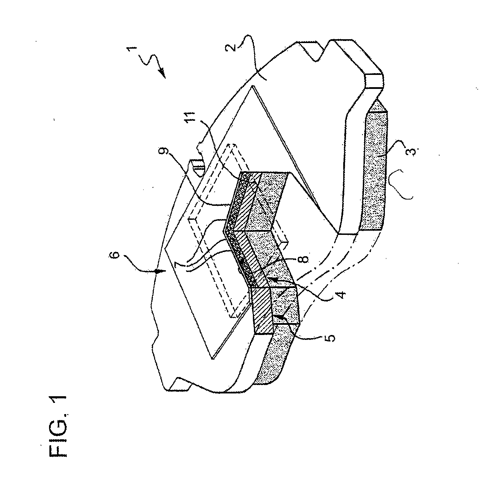

In figure 1 reference number 1 indicates as a whole a brake plate for a braking system of a motor vehicle, in particular a car or a motorbike.

Brake plate 1 comprises a back plate 2 made preferably of steel or cast iron, a friction layer 3 preferably sintered on back plate 2, and a particle damping device 4. Back plate 2 has a first surface 5 defining an interface with friction layer 3 and a second surface 6 opposite to first surface 5 and contacting known support elements of the braking system, such as pistons and callipers. Friction layer 3 is preferably a composite material constituted by a powder and matrix that needs to be heat treated, e.g. hot pressed or sintered, on back plate 2. Such a powder is a mix of different compounds, i.e. a mix of friction compounds, a mix of lubricant compounds, a mix of inert compounds, and a mix of metals. Therefore, the powder is a mix of organic and inorganic compounds. The matrix is preferably a polymeric compound, more preferably a phenolic resin.

Particle damping device 4 comprises a granular material having a plurality of particles 7 housed in at least a cavity 8 preferably defined by back plate 2 and having preferably a rectangular/squared perimeter. Particles 7 are free to move in cavity 8, which means free to translate in three orthogonal direction and free to rotate about three mutually orthogonal axes, i.e. they have 6 degrees of freedom (DOF).

Particles 7 can be of any shape, preferably spherical and their characteristic dimension, in particular diameter, ranges from a fraction of a millimetre, for example from 0.1mm, to 10mm depending on the dimension of the brake plate. According to the present invention, good empirical results were obtained with dry particle damping, i.e. particles are not combined with a fluid. However, particles combined with a gel may be of advantage if during certain manufacturing handling the cavity is open.

According to a preferred design practice, particles 7 are dimensioned to occupy no more than 90% in volume of cavity 8 so that they are free to move in the cavity itself. Furthermore, the material of particles 7 can be chosen upon the intended application, for example it is possible to use steel spheres. Alternative to the later described preferred solution to have the particles 7 in the cavity during sintering, particles can be filled into the cavity after the sintering process of the friction layer is completed, then only normal operation temperatures have to be considered for selection of the particle material.

Advantageously, the position of cavity 8 can be identified according to the following steps:
- performing a free-free analysis of back plate 2 without damping device 4 to obtain a frequency response function;
- identifying at least the highest peak of amplitude and the relative vibration mode;
- locating cavity/cavities 8 far from nodes and close to the points having the highest vibration amplitude of the selected vibration mode/modes. Preferably, the point/points of highest vibration amplitude shall fall within the perimeter of cavity/cavities 8.

The brake plate 1 comprises a plurality of fixing portions for connection with known supporting elements to be actuated against the brake disk of the braking system. Therefore, it might happen that the points having the highest vibration amplitude lie close to such fixing portions (not shown), which are unsuitable for locating a cavity 8. In this case it is possible to locate cavity 8 close to such points without any interference with the fixing portions of brake pad 1.

According to a preferred embodiment of the present invention, cavity 8 is a recess of surface 6 and can be closed by a shim 9 normally used on a brake plate 1 facing to the actuation elements.

A wall 11 of the back plate 2 is located between particles 7 and friction layer 3.

According to a non claimed embodiment, particles 7 are assembled in cavity 8 as follows. Particles 7 are packed in a package housed in cavity 8. The package is made of a material that burns/melts after cavity 8 is closed, e.g. of cellulose, at a temperature that preserves the functionality of all the other components of brake plate 1, i.e. the burning temperature of cellulose is far lower than the sintering temperature of the friction layer 3 and/or of annealing temperature of steel of the support plate 2 and/or particles 7. According to a preferred embodiment of the present invention, burning/melting temperature of the package is below the temperature at which friction layer 3 is sintered on support plate 2.

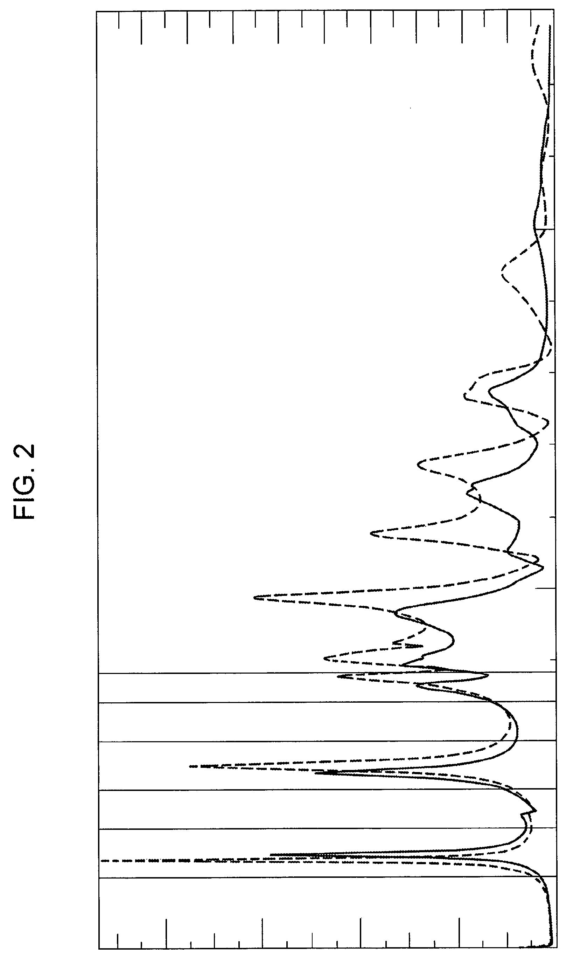

Figure 2 shows a comparison of a brake plate 1 with a particle damping device 4 according to the present invention and a back plate having a conventional antinoise shim.

Spectra are similar which means that the dimension of the cavity is small compared to the overall mass of the brake plate. In particular the little shift at low frequency is the result of the weight difference.

A good damping of high frequencies, i.e. the noisy frequencies, is evident.

A brake plate according to the present invention has the following advantages.

Noise attenuation is up to 80% with almost no impact on the manufacturing process and manufacturing costs. In particular, it is possible to manufacture cavity 8 before the heat treatment of friction layer 3 and afterwards close the same with a plate equivalent to shim 9 that is normally used to assemble brake plate to supporting elements. Therefore, the interface of the breaking system shall not be adapted to the improved brake plate.

Furthermore, cavity 8 is defined by the back plate so that it is possible to deposit any kind of friction material with no impact on the manufacturing steps relating to the friction plate. Therefore, the braking pad according to the present invention is suitable for any friction material, including sintering ones.

Furthermore, the damping is temperature independent because energy is dissipated in collisions and temperature has little influence on this kind of process.

When the burning/melting temperature of the package of the granular material is lower than a sintering temperature of friction layer 3, a single manufacturing phase is necessary without any impact on the manufacturing process.

It is finally apparent that modifications and variants can be made to brake plate 1 disclosed and illustrated herein without departing from the scope of protection of the present invention, as defined in the appended claims.

In particular, depending on the mix of compounds constituting the friction layer, the latter can be fixed to the back plate by hot pressing instead of sintering.

## Claims

1. Brake plate (1) for a braking system of a motor vehicle, comprising a back plate (2), a friction layer (3) constituted by a braking friction material sintered on and supported by said back plate (2), and a particle damping device (4) defining a cavity (8), said cavity (8) being defined by said back plate (2) on a surface (5) that is opposite to that facing said frication layer (3), **characterized in that** said cavity (8) is a recess such that a wall of the back plate (2) is interposed between granular material (7) of said particle damping device (4) and said friction layer (3).

2. Brake plate as claimed in claim 1, **characterized by** comprising a shim (9) and in that said cavity (8) is closed by said shim (9).

3. Brake plate according to claim 1 or 2, **characterized in that** said granular material (7) is configured so as to be free to move in at least a cavity (8).

4. Brake plate as claimed in claim 3, **characterized in that** said granular material (7) has a volume up to 90% of said cavity (8).

5. Brake plate as claimed in any of the preceding claims, **characterized in that** said particle damping device (4) is positioned at least close to the points of maximum vibration amplitude of a vibration mode of said back plate (2).

6. Brake plate as claimed in any of the preceding claims, **characterized in that** said points of maximum vibration amplitude lies within the perimeter of said cavity (8).

7. Brake plate as claimed in any of the preceding claims, **characterized in that** said friction layer comprises a mix of powders having inorganic and organic compounds.

## Patentansprüche

1. Bremsplatte (1) für ein Bremssystem eines Motorfahrzeugs, umfassend eine Rückenplatte (2), eine Reibschicht (3), die aus einem Bremsreibmaterial zusammengesetzt ist, das auf die Rückenplatte (2) gesintert ist und von dieser getragen wird, und eine Partikeldämpfvorrichtung (4), die einen Hohlraum (8) definiert, wobei der Hohlraum (8) von der Rückenplatte (2) auf einer Oberfläche (5) definiert ist, die derjenigen entgegengesetzt ist, die der Reibschicht (3) gegenüber liegt, **dadurch gekennzeichnet, dass** der Hohlraum (8) eine derartige Aussparung ist, dass eine Wand der Rückenplatte (2) zwischen granulösem Material (7) der Partikeldämpfvorrichtung (4) und der Reibschicht (3) angeordnet ist.

2. Bremsplatte nach Anspruch 1, **dadurch gekennzeichnet, dass** sie eine Scheibe (9) umfasst und dass der Hohlraum (8) von der Scheibe (9) geschlossen ist.

3. Bremsplatte nach Anspruch 1 oder 2, **dadurch gekennzeichnet, dass** das granulöse Material (7) derart konfiguriert ist, dass es sich in zumindest einem Hohlraum (8) frei bewegen kann.

4. Bremsplatte nach Anspruch 3, **dadurch gekennzeichnet, dass** das granulöse Material (7) ein Volumen von bis zu 90 % des Hohlraums (8) aufweist.

5. Bremsplatte nach einem der vorstehenden Ansprüche, **dadurch gekennzeichnet, dass** die Partikeldämpfvorrichtung (4) zumindest nahe an den Punkten der maximalen Schwingungsamplitude eines Schwingungsmodus der Rückenplatte (2) angeordnet ist.

6. Bremsplatte nach einem der vorstehenden Ansprüche, **dadurch gekennzeichnet, dass** die Punkte der maximalen Schwingungsamplitude innerhalb des Umfangs des Hohlraums (8) liegen.

7. Bremsplatte nach einem der vorstehenden Ansprüche, **dadurch gekennzeichnet, dass** die Reibschicht eine Mischung aus Pulvern umfasst, die anorganische und organische Verbindungen aufweisen.

## Revendications

1. Plaque de frein (1) pour un système de freinage d'un véhicule à moteur, comprenant une plaque arrière (2), une couche de friction (3) constituée d'un matériau de friction de freinage fritté sur et supporté par ladite plaque arrière (2) et un dispositif d'amortissement de particules (4) définissant une cavité (8), ladite cavité (8) étant définie par ladite plaque arrière (2) sur une surface (5) qui est opposée à celle faisant face à ladite couche de friction (3), **caractérisée en ce que** ladite cavité (8) est un évidement, de sorte qu'une paroi de la plaque arrière (2) est interposée entre un matériau granulaire (7) dudit dispositif d'amortissement de particules (4) et ladite couche de friction (3).

2. Plaque de frein selon la revendication 1, **caractérisée en ce qu'**elle comprend une cale (9) et **en ce que** ladite cavité (8) est fermée par ladite cale (9).

3. Plaque de frein selon les revendications 1 ou 2, **caractérisée en ce que** ledit matériau granulaire (7) est configuré de manière à être libre de se déplacer dans au moins une cavité (8).

4. Plaque de frein selon la revendication 3, **caractérisée en ce que** ledit matériau granulaire (7) a un volume pouvant aller jusqu'à 90 % de ladite cavité (8).

5. Plaque de frein selon l'une quelconque des revendications précédentes, **caractérisée en ce que** ledit dispositif d'amortissement de particules (4) est positionné au moins à proximité des points d'amplitude de vibration maximum d'un mode de vibration de ladite plaque arrière (2).

6. Plaque de frein selon l'une quelconque des revendications précédentes, **caractérisée en ce que** lesdits points d'amplitude de vibration maximum se trouvent dans le périmètre de ladite cavité (8).

7. Plaque de frein selon l'une quelconque des revendications précédentes, **caractérisée en ce que** ladite couche de friction comprend un mélange de poudres ayant des composés inorganiques et organiques.
